# EUROPEAN PATENT APPLICATION

(11) **EP 4 667 767 A1**
(43) Date of publication of application: **24.12.2025**
(21) Application number: 24756708.4
(22) Date of filing: 02.02.2024
(51) Int. Cl.: F16C 33/62, C21D 1/06, C21D 9/40, C22C 38/00, C23C 8/34, F16C 19/06, F16C 33/44, F16C 33/56, F16C 33/64

(54) **BEARING COMPONENT, METHOD FOR MANUFACTURING SAME, AND ROLLING BEARING**

(30) Priority: 15.02.2023 JP 2023021903
(71) Applicant: Minebea Mitsumi Inc., Kitasaku-gun, Nagano 3890293 (JP)
(72) Inventor: OGIWARA, Takashi, Kitasaku-gun Nagano 389-0293 (JP); FURUKOSHI, Akimi, Kitasaku-gun Nagano 389-0293 (JP); OTSUKI, Eiji, Kitasaku-gun Nagano 389-0293 (JP)
(74) Representative: Winter, Brandl - Partnerschaft mbB
(86) International application number: PCT/JP2024/003581
(87) International publication number: WO 2024/171858

(57) **Abstract**

A bearing component is made of steel containing 0.6 mass% or more and 0.95 mass% or less of carbon. A hardness A of a region from a raceway groove surface to a depth of 0.2 mm is in a range of 750 to 880 Hv, a hardness B of a region from the raceway groove surface to a depth exceeding 0.2 mm is in a range of 633 to 832 Hv, a retained austenite amount C on the raceway groove surface is 20 vol% or less, and an overall average retained austenite amount D is 8 vol% or less.

## Description

### Technical Field

The present invention relates to a bearing component, a method for manufacturing the bearing component, and a rolling bearing.

### Background Art

Conventionally, a rolling bearing is used as a member rotatably supporting a rotating shaft. The rolling bearing is required to have high dimensional stability, wear resistance, and fatigue strength under high load. In order to meet these requirements, bearing components used for rolling bearings are subjected to heat treatments, and various studies have been conducted on methods and conditions for such heat treatments. In particular, it is known that a carbonitriding treatment of diffusing carbon and nitrogen into steel and then quenching is effective in improving the durability of bearing components (for example, see Patent Documents 1 and 2).

In recent years, with further increase in load and temperature in use environments, rolling bearings are required to have characteristics (long life under high load, high dimensional stability under high temperature, and the like) enabling use under higher load conditions and at higher temperatures. Therefore, a bearing component with higher durability is desired.

### Citation List

### Patent Literature

Patent Document 1: JP 2007-277648 A
Patent Document 2: JP 2008-267402 A

### Summary of Invention

### Technical Problem

An object of the present invention is to provide a bearing component with high durability, a method for manufacturing the bearing component, and a rolling bearing including the bearing component.

### Solution to Problem

The above-mentioned problem is solved by one aspect of the present invention described below, for example. That is, one aspect of the present invention is a bearing component made of steel containing 0.6 mass% or more and 0.95 mass% or less of carbon, wherein a hardness A of a region from a raceway groove surface to a depth of 0.2 mm is in a range of 750 to 880 Hv, a hardness B of a region from the raceway groove surface to a depth exceeding 0.2 mm is in a range of 633 to 832 Hv, a retained austenite amount C on the raceway groove surface is 20 vol% or less, and an overall average retained austenite amount D is 8 vol% or less.

### Brief Description of Drawings

Fig. 1 is a cross-sectional view taken along a plane including an axis of a rolling bearing according to an embodiment being an example of the present invention.
Fig. 2 is a schematic plan view schematically illustrating a ring-shaped bearing component being a measurement target of a hardness and a retained austenite amount.
Fig. 3 is a schematic cross-sectional view of a ring-shaped bearing component being a measurement target of the hardness and retained austenite amount, taken along an axial direction, and corresponds to a cross-sectional view taken along line A-A in Fig. 2.
Fig. 4 is a partially enlarged view schematically enlarging a region B in Fig. 3.
Fig. 5 is an explanatory view illustrating a state where a retained austenite amount on a raceway groove surface is being measured.
Fig. 6 is an explanatory view illustrating a state where an overall average retained austenite amount of the bearing component is being measured.
Fig. 7 is an explanatory view illustrating a cut surface for measuring an overall average retained austenite amount of the bearing component.
Fig. 8 is a schematic cross-sectional view of a ring-shaped bearing component being a measurement target of a nitrogen concentration, taken along an axial direction, and corresponds to a cross-sectional view taken along line A-A in Fig. 2.
Fig. 9 is a graph illustrating results of a durability evaluation test for a bearing component of Example 6.

### Description of Embodiments

Hereinafter, a bearing component, a method for manufacturing the bearing component, and a rolling bearing according to an embodiment of the present invention will be described. For convenience of explanation, the rolling bearing, the bearing component, and the method for manufacturing the bearing component will be described in this order.

### [Rolling Bearing]

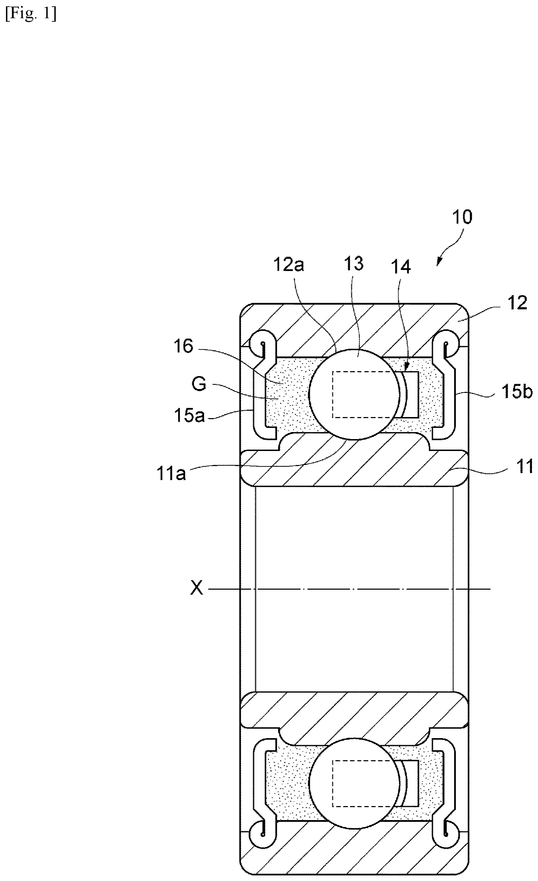

Fig. 1 is a cross-sectional view taken along a plane including an axis of a rolling bearing (ball bearing) 10 according to an embodiment being an example of the present invention. The rolling bearing 10 has a basic structure similar to a rolling bearing of the related art, and includes an annular inner ring 11, an annular outer ring 12, a plurality of rolling elements (balls) 13, a retainer 14, and annular seal members 15a and 15b.

The inner ring 11 is a cylindrical structure disposed coaxially with a central axis (rotation axis) x of a shaft. The outer ring 12 is a cylindrical structure disposed coaxially with the inner ring 11 at an outer periphery side of the inner ring 11. Each of the plurality of rolling elements 13 is a spherical element (ball) disposed in a track in a bearing space (annular space) 16 formed between the inner ring 11 and the outer ring 12. That is, the rolling bearing 10 in the present embodiment is a ball bearing.

A lubricant G, such as a grease composition, is sealed in the bearing space 16. The lubricant G acts to reduce the friction between the rolling elements 13 and the retainer 14, and the friction between the rolling elements 13 and the inner ring 11 and the outer ring 12. The annular seal members 15a and 15b are formed of, for example, steel plates, and protrude from an inner peripheral surface of the outer ring 12 toward the inner ring 11 to shield the bearing space 16 being a raceway from the outside.

A recessed part 12a having an arc shape in cross section is formed on the inner peripheral surface of the outer ring 12 in a circumferential direction of the outer ring 12. In addition, a recessed part 11a having an arc shape in cross section is formed on an outer peripheral surface of the inner ring 11 in the circumferential direction of the inner ring 11. The plurality of rolling elements 13 are guided in the circumferential direction by the recessed parts 11a and 12a formed in a groove shape.

The recessed part 12a constitutes a raceway groove of the outer ring 12 being a bearing component of the rolling bearing 10. Hereinafter, the recessed part 12a is referred to as an outer ring raceway groove 12a. In addition, the recessed part 11a constitutes a raceway groove of the inner ring 11 being a bearing component of the rolling bearing 10. Hereinafter, the recessed part 11a is referred to as an inner ring raceway groove 11a. Note that the "raceway groove" is a member or a portion having many names such as "bearing groove" and "rolling groove".

The retainer 14 is disposed in the track to hold the plurality of rolling elements 13. The retainer 14 is an annular body disposed coaxially with the central axis x of the shaft and includes a plurality of recessed parts for holding the rolling elements 13 at one side in the direction of the central axis, and in each of the recessed parts, the rolling element 13 is accommodated. Note that for the retainer 14, the shape (e.g., a crown shape, a waveform, etc.) and material (e.g., a steel sheet, resin, etc.) may be appropriately selected, and are not limited to a specific shape and material.

In the rolling bearing 10 having the above configuration, one or both of the outer ring 12 and the inner ring 11 being bearing components correspond to the bearing component according to the present embodiment described below. It is preferable that both the outer ring 12 and the inner ring 11 correspond to the bearing component according to the present embodiment.

Further, the bearing components other than the outer ring 12 and the inner ring 11 (the rolling elements 13, the retainer 14, the annular seal members 15a and 15b, and the like) may also meet similar conditions to conditions of the present embodiment described below. Note that the rolling element 13 may be made of ceramics such as ZrO₂, SiC, or Si₃N₄ to implement high durability.

### [Bearing Component]

The bearing component according to the present embodiment meets the following conditions being a finding obtained as a result of intensive studies by the present inventors.

### (a) Carbon Content

The bearing component is made of steel containing 0.6 mass% or more and 0.95 mass% or less of carbon.

### (b) Hardness

A hardness of a region from a raceway groove (the inner ring raceway groove 11a or the outer ring raceway groove 12a) surface to a depth of 0.2 mm is in a range of 750 to 880 Hv, and a hardness of a region from the raceway groove surface to a depth exceeding 0.2 mm is in a range of 633 to 832 Hv.

### (c) Retained Austenite Amount (Retained γ Amount)

A retained austenite amount of the raceway groove (the inner ring raceway groove 11a or the outer ring raceway groove 12a) surface is 20 vol% or less, and an overall average retained austenite amount is 8 vol% or less.

In addition, the bearing component according to the present embodiment also preferably meets the following condition regarding (d) nitrogen concentration.

### (d) Nitrogen Concentration

The nitrogen concentration from a surface to a depth of about 0.08 mm is in a range of about 0.2 to 0.8 mass%.

Each of the conditions (a) to (d) will be described in detail.

### <(a) Carbon Content>

The carbon content in the steel to be used has a significant influence on the hardness and the carbide content of the bearing component after quench hardening. When the carbon content is large, a bearing component with high hardness is easily obtained. However, from the perspective of manufacturing cost, the carbon content is preferably within a range enabling forming by cold forging. Therefore, in the present embodiment, the range of the carbon content enabling cold forging is preferably set to 0.6 mass% or more and 0.95 mass% or less.

If the carbon content in the steel to be used is less than 0.6 mass%, it becomes difficult to secure the carbide amount in the bearing component after quench hardening, making it difficult to secure the hardness. On the other hand, if the carbon content in the steel to be used exceeds 0.95 mass%, forming by cold forging becomes difficult, and therefore, most forming should be performed by machining, raising concerns that the manufacturing cost will increase.

The chemical compositions other than iron (Fe) and carbon (C) in the steel to be used are, for example, as follows.
- Si: 0.5 mass% or less
- Mn: 1 mass% or less
- Cr: 1 to 2 mass%
- P: 0.1 mass% or less
- S: 0.1 mass% or less

Note that the chemical compositions are not limited to the above. In addition to these, elements other than these, for example, Mo, Ni, V, B, Al, N, and the like may be added to the constituent elements in accordance with various purposes. In addition, various general impurities may be contained.

### <(b) Hardness>

The raceway groove (the inner ring raceway groove 11a or the outer ring raceway groove 12a) surface is a portion in contact with the rolling elements 13 and subjected to a mechanical load, and thus is desired to have high hardness. In particular, a region from the surface to a depth of 0.2 mm is desired to have high hardness in order to secure mechanical strength against contact with the rolling elements 13.

However, if the surface is made to have an excessively high hardness, a large amount of nitride precipitates on the raceway groove surface, leading to a bearing component with reduced durability. Therefore, in the present embodiment, the hardness in the region from the raceway groove surface to the depth of 0.2 mm (hereinafter, referred to as "surface hardness A") is set to be within a range of 750 to 880 Hv. The surface hardness A is preferably in a range of 800 to 880 Hv.

On the other hand, if the hardness is increased not only on the surface but also in a wide region extending to a deeper depth, the cost increases. Therefore, in the present embodiment, a hardness of a region from the raceway groove surface to a depth exceeding 0.2 mm (hereinafter referred to as "deep part hardness B") is set to be in a range of 633 to 832 Hv.

Note that the "hardness" in the surface hardness A and the deep part hardness B refers to Vickers hardness defined by the Japanese Industrial Standard JIS Z2244, and the test force (load) F was set to 4.903 N.

A method for measuring the hardness of the region from the raceway groove surface to a predetermined depth (surface hardness A and deep part hardness B) will be described later.

### <(c) Retained Austenite Amount (Retained γ Amount)>

The retained austenite after heat treatment causes aging deformation, and therefore, from the perspective of dimensional stability, the retained austenite amount is preferably small. Therefore, in the present embodiment, an overall average retained austenite amount (hereinafter, referred to as "average retained γ amount D") of the bearing component is set to 8 vol% or less.

On the other hand, from the perspective of fatigue life, it is known that the larger the retained austenite amount, the longer the fatigue life of the rolling groove when the raceway grooves 11a and 12a are subjected to repeated fatigue. In this respect, it is desirable that a certain amount of retained austenite remains on the groove surface. Therefore, in the present embodiment, the retained austenite amount on the raceway groove surface (hereinafter, referred to as "surface retained y amount C") is set to 20 vol% or less.

As described above, it is desirable to minimize the retained austenite amount from the perspective of dimensional stability, but from the perspective of fatigue life, the fatigue life of the rolling groove can be enhanced by leaving a certain amount of retained austenite.

Therefore, in the present embodiment, the surface retained y amount C is preferably 10 vol% or more, and more preferably 10 vol% or more and 20 vol% or less. In addition, in the present embodiment, the average retained y amount D is preferably 2 vol% or more, and more preferably 2 vol% or more and 8 vol% or less.

### <(d) Nitrogen Concentration>

The nitrogen concentration from a surface to a depth of 0.08 mm is preferably set to be in a range of about 0.2 to 0.8 mass%, and more preferably in a range of about 0.3 to 0.7 mass%. If the nitrogen concentration in the vicinity of the surface is too low, it is difficult to secure the surface hardness contributing to the improvement of durability. On the other hand, if the nitrogen concentration in the vicinity of the surface is too high, a large amount of nitride precipitates in the vicinity of the surface, raising concerns that the bearing component may exhibit reduced durability. Note that, for (d) nitrogen concentration, an average value of the measured values of the nitrogen concentration from the surface to the depth of 0.08 mm may be within the above-described preferable concentration range, and there may be a portion where the measured value is out of the above-described preferable concentration range in the measurement range from the surfaces to 0.08 mm.

### <Methods for Measuring (b) Hardness, (c) Retained Austenite Amount, and (d) Nitrogen Concentration>

Examples of methods for measuring (b) hardness, (c) retained austenite amount, and (d) nitrogen concentration in the present embodiment will be described with reference to the drawings.

### Measurement of (b) Hardness

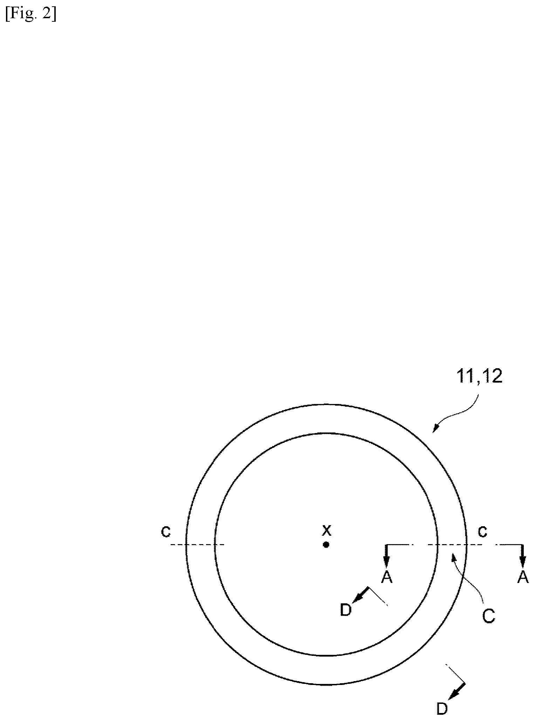

Figs. 2 to 4 are explanatory views for explaining an example of a method for measuring (b) hardness in the present embodiment.

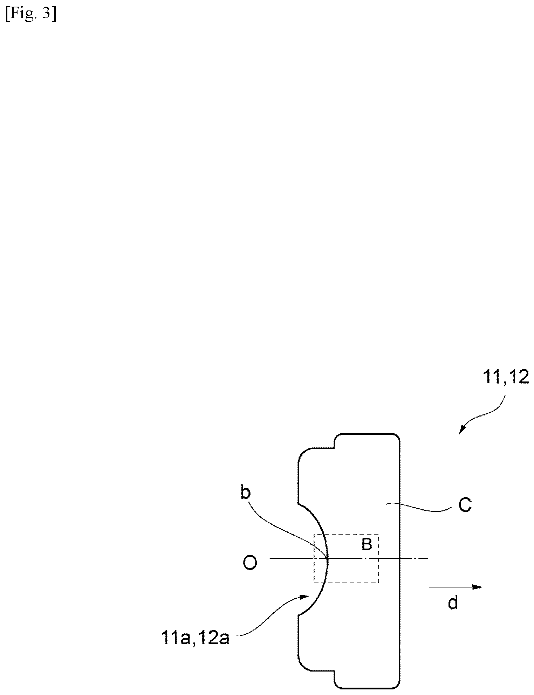

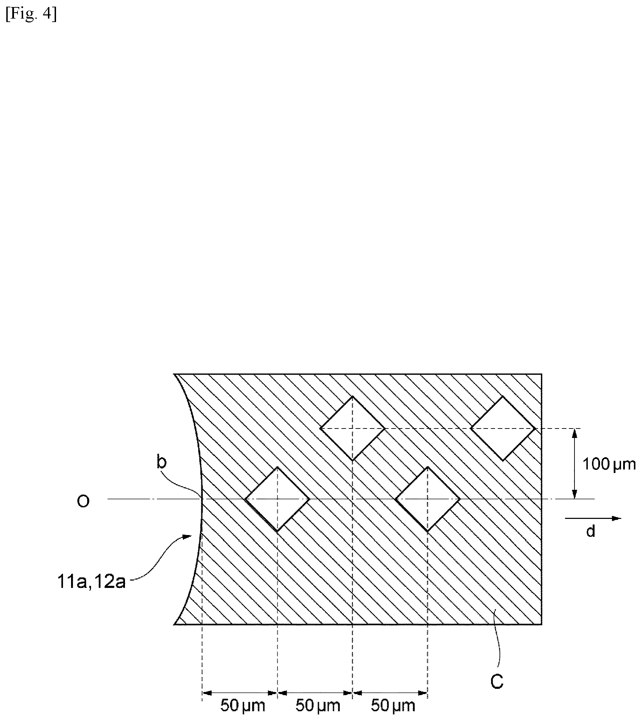

Specifically, Fig. 2 is a schematic plan view schematically illustrating a ring-shaped bearing component being a measurement target of (b) hardness and (c) retained austenite amount, and Fig. 3 is a schematic cross-sectional view when the ring-shaped bearing component is cut in an axial direction. Fig. 3 corresponds to a cross-sectional view taken along line A-A in Fig. 2. Since Figs. 2 and 3 are views illustrating both the inner ring 11 and the outer ring 12, the contours are not accurate and are merely schematic views. In addition, Fig. 4 is a partially enlarged view of Fig. 3, and schematically enlarges a region B in Fig. 3. However, in Fig. 4, the dimensional balance of each configuration is not aligned, and Fig. 4 is also merely a schematic view.

As illustrated in Fig. 2, as for the inner ring 11 or the outer ring 12 (hereinafter, referred to as "bearing component 11, 12"), a plane including the central axis x is cut as a cut surface (a broken line C in the figure) to obtain a cut surface c. Fig. 3 illustrates the obtained cut surface c including the inner ring raceway groove 11a or the outer ring raceway groove 12a (hereinafter, referred to as "raceway groove 11a, 12a") of the bearing component 11, 12.

In the hardness measurement, as illustrated in Fig. 3, a center b in the width direction of the raceway groove 11a, 12a is defined as a "surface" in the measurement target, and a center line O passing through the center b of the raceway groove 11a, 12a is defined as a measurement target in the depth direction. In practice, as illustrated in Fig. 4, a position of 50 µm from the center b in the depth direction (the direction of the arrow d) is defined as a first measurement point, and further, a position of 50 µm in the depth direction (the direction of the arrow d) and shifted from the center line O by 100 µm is defined as a second measurement point. Further, in the depth direction (in the direction of the arrow d), measurement points are set every 50 µm such that odd-numbered points lie on the center line O, and even-numbered points are located at positions shifted by 100 µm from the center line O.

The hardness was measured at a total of 18 measurement points up to a depth of 0.9 mm at the above measurement positions. A total of four points from the center b of the raceway groove 11a, 12a to the fourth point at a depth of 0.2 mm are defined as a "region from the raceway groove surface to a depth of 0.2 mm" and are set as the measurement points for the surface hardness A. In addition, a total of 14 points from the fifth to the eighteenth, located beyond a depth of 0.2 mm from the center b of the raceway groove 11a, 12a, are defined as a "region exceeding a depth of 0.2 mm from the raceway groove surface" and are set as measurement points for deep part hardness B.

The number of measurement points for each of the surface hardness A and the deep part hardness B was set to the number n (n = 4, n = 14) for each hardness measurement, and the Vickers hardness was measured. The hardness was measured using a commercially available Vickers hardness tester or micro Vickers hardness tester, with a test force (load) F of 4.903 N, and other conditions conforming to Japanese Industrial Standard JIS Z2244.

### Measurement of (c) Retained Austenite Amount

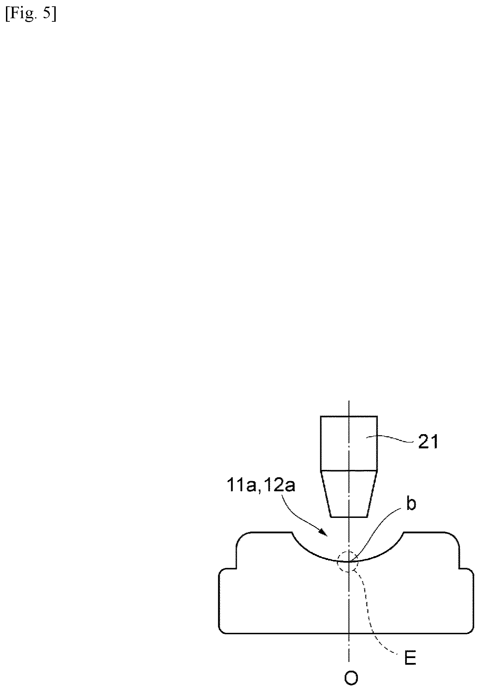

Figs. 5 to 7 are explanatory views for explaining an example of the method for measuring (c) retained austenite amount in the present embodiment.

First, Fig. 5 is an explanatory view illustrating a state where the retained austenite amount (surface retained y amount C) on the raceway groove surface is being measured, and illustrates a cross section of the bearing component 11, 12 taken along line D-D in Fig. 2. As illustrated in Fig. 5, a collimator 21 of a measurement device is set on the center line O, and the retained austenite amount is measured toward the center b in the width direction of the raceway groove 11a, 12a. As illustrated in Fig. 5, the measurement region is a region (region E in Fig. 5) centered on the center b in the width direction of the raceway groove 11a, 12a and having a narrow region of a diameter (1 mm) range of the collimator 21.

For measurement of the retained austenite amount, the surface retained y amount C can be measured by measuring the surface of the raceway groove 11a, 12a using an X-ray diffraction retained austenite amount measuring machine.

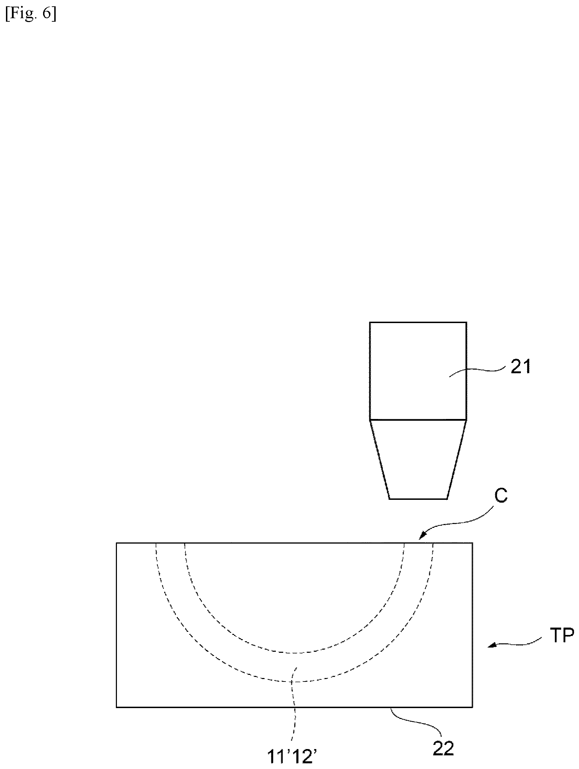

Fig. 6 is an explanatory view illustrating a state where the overall average retained austenite amount (average retained γ amount D) of the bearing component is being measured. As illustrated in Fig. 6, for the measurement of the average retained γ amount D, in order to measure the cut surface of the plane including the central axis x (see Figs. 2 and 3), a test piece TP was prepared by embedding a cut piece 11', 12' of the bearing component 11, 12 in a resin 22 so that the cut surface c appears on the surface.

The overall average retained austenite amount (average retained y amount D) of the bearing component was measured on the cut surface c appearing on the surface of the test piece TP using the same measurement device as the measurement device for the measurement of the raceway groove surface.

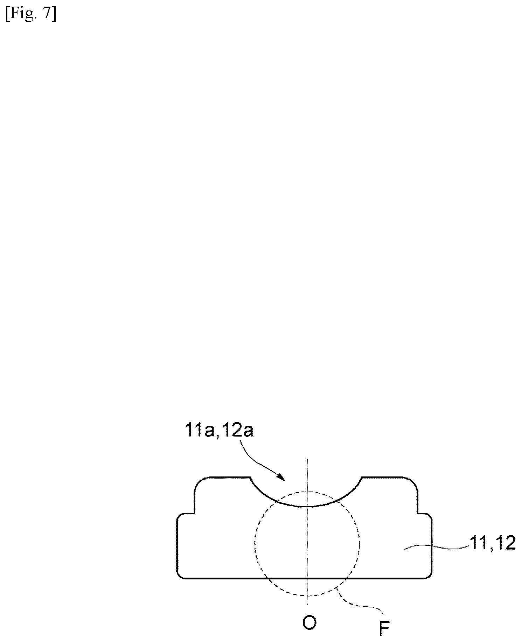

Fig. 7 is an explanatory view illustrating the cut surface c for measuring the average retained y amount D. The bearing component 11, 12 is illustrated in a cross-section taken along line D-D in Fig. 2, similarly to Fig. 5. As illustrated in Fig. 7, the measurement region is measured on the center line O passing through the center b in the width direction of the raceway groove 11a, 12a such that the range of the diameter (3 mm) of the collimator 21 covers the entire region of the bearing component 11, 12 (region F in Fig. 7).

### Measurement of (d) Nitrogen Concentration

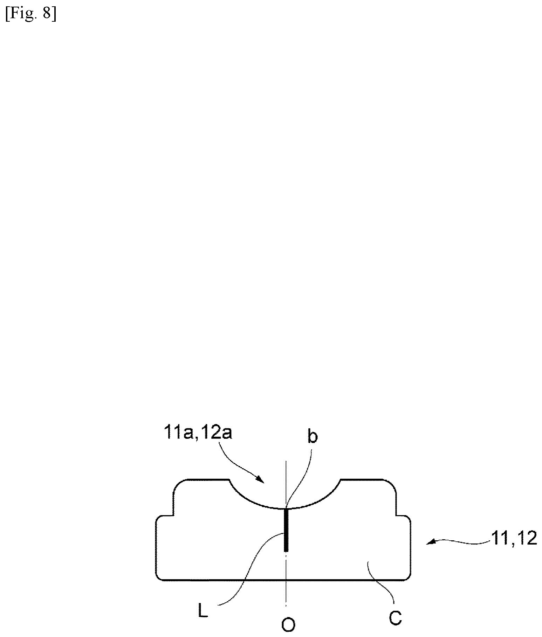

Fig. 8 is an explanatory view for explaining an example of a method for measuring (d) nitrogen concentration in the present embodiment, and specifically, is a schematic cross-sectional view when a ring-shaped bearing component being a measurement target of (d) nitrogen concentration is cut in an axial direction. Fig. 8 corresponds to a cross-sectional view taken along line A-A in Fig. 2, and the contour is not accurate and is merely a schematic view, as in Fig. 3.

In the measurement of (d) nitrogen concentration, as in the measurement of (b) hardness, as for the bearing component 11, 12 (the inner ring 11 or the outer ring 12), a plane including the central axis x is cut as a cut surface (a broken line C in the figure) to obtain a cut surface c, as illustrated in Fig. 2. Fig. 8 illustrates the obtained cut surface c including the raceway groove 11a, 12a of the bearing component 11, 12.

As illustrated in Fig. 8, the center b in the width direction of the raceway groove 11a, 12a was defined as a "surface" in the measurement target, and a line segment L on the center line O passing through the center b of the raceway groove 11a, 12a was defined as a measurement target in the depth direction. The nitrogen concentration from the surface to the depth of 0.08 mm was measured by line analysis of the cross section of the raceway grooves 11a and 12a of the inner ring 11 and the outer ring 12 in the depth direction along the line segment L illustrated in Fig. 8 using an EPMA (Electron Probe Micro Analyzer).

In the present embodiment, the nitrogen concentration was measured under the measurement conditions for (d) nitrogen concentration of, for example, an acceleration voltage of 15 kV, an emission current of 100 nA, a beam diameter of 10 µm, and a step interval of 10 µm. In the measurement data, the ninth analysis point from the surface of the raceway groove 11a, 12a (the boundary position between the embedding resin and the metal) corresponds to a position of 0.08 mm in the depth direction (the direction of the arrow d) from the center b. Therefore, the value at the ninth point was set as the measurement result of (d) nitrogen concentration.

### [Method for Manufacturing Bearing Component]

The method for manufacturing a bearing component according to the present embodiment includes two types of a manufacturing method A and a manufacturing method B, and includes any one of the following steps being a finding obtained as a result of intensive studies by the present inventors. The bearing component according to the present embodiment described above can be manufactured through the operations in the respective steps of either the manufacturing method A or the manufacturing method B according to the present embodiment described below.

### (Manufacturing Method A)

(1) Carbonitriding treatment step: Performed in a temperature range equal to or higher than the A1 transformation point and equal to or lower than 900°C.
(2) Quench hardening treatment step: Cooled to a temperature below the A1 transformation point.
(3) Low-temperature tempering treatment step: Performed in a temperature range of 90 to 170°C.
(4) Sub-zero treatment step: Performed in a temperature range equal to or lower than 0°C.
(5) Tempering treatment step: Performed in a temperature range of 160 to 240°C.

### (Manufacturing Method B)

(1) Carbonitriding treatment step: Performed in a temperature range equal to or higher than the A1 transformation point and equal to or lower than 900°C.
(2) Quench hardening treatment step: Cooled to a temperature below the A1 transformation point.
(4) Sub-zero treatment step: Performed in a temperature range equal to or lower than 0°C within 24 hours after completion of the operation in the (2) quench hardening treatment step.
(5) Tempering treatment step: Performed in a temperature range of 160 to 240°C.

Since the manufacturing method B includes the same steps as the steps of the manufacturing method A except that the (3) low-temperature tempering treatment step is omitted and a predetermined condition is added in the (4) sub-zero treatment step, the manufacturing method A and the manufacturing method B will be described below together while simply referring to the differences. In the following description, the steps will be described step by step and in the order of the steps.

### <(1) Carbonitriding Treatment Step>

In the present embodiment, the (1) carbonitriding treatment step is a step of performing a carburizing treatment and a nitriding treatment in a temperature range equal to or higher than the A1 transformation point and equal to or lower than 900°C. The A1 transformation point is a temperature. In this temperature, the transformation from austenite to ferrite + cementite (Fe₃C) starts. Under equilibrium conditions, the A1 transformation point is 727°C regardless of the carbon content in the steel.

Although either the carburizing treatment or the nitriding treatment may be performed first, the present inventors have found through their intensive studies that it is preferable to perform the nitriding treatment first and then perform the carburizing treatment. In general, the carburizing treatment is performed first. However, performing the nitriding treatment beforehand allows more nitrogen to penetrate more deeply from the steel surface.

In general, nitrogen cannot penetrate so deeply in the nitriding treatment, whereas carbon can penetrate relatively deeply in the carburizing treatment. Therefore, it is presumed that when the carburizing treatment is performed after the nitriding treatment, carbon acts to push the nitrogen already having penetrated the surface further inward.

In addition, since the nitriding treatment can generally be performed at a lower temperature than the carburizing treatment, the nitriding treatment is first performed by raising the temperature to a temperature suitable for allowing a large amount of nitrogen to penetrate (for example, 800°C), and then the carburizing treatment is performed by raising the temperature to a temperature suitable for the carburizing treatment (for example, 850°C).

One or both of the carburizing treatment and the nitriding treatment may be repeated a plurality of times. In particular, the present inventors have found through intensive studies that it is preferable to first perform the nitriding treatment, then perform the carburizing treatment, and then repeat the nitriding treatment. When the nitriding treatment is performed at a relatively low temperature, a large amount of nitrogen can be made to penetrate, but the penetration in the depth direction is likely to be shallow. On the other hand, when the nitriding treatment is performed at a high temperature, nitrogen can be made to penetrate deeply, but the amount of nitrogen to penetrate is likely to be small. Therefore, it is presumed that nitrogen can be made to penetrate in the depth direction by first performing a first nitriding treatment at a relatively low temperature (for example, 750 to 800°C) to cause a large amount of nitrogen to penetrate into the surface layer, then performing a carburizing treatment at an increased temperature (for example, 830 to 880°C), and then performing a second nitriding treatment at the same temperature.

In this step, for example, it is preferable to perform at least a part of the operation under reduced pressure. Here, "performed under reduced pressure" means that the inside of the furnace is reduced in pressure and the operation in the carbonitriding treatment step is performed under the reduced pressure condition. In addition, "at least a part of the operation" is intended to include in concept, a case where only one of the carburizing treatment and the nitriding treatment is performed under reduced pressure, or a case where when the carburizing treatment and the nitriding treatment are performed a plurality of times, only a part of the carburizing treatment and the nitriding treatment is performed under reduced pressure.

By performing the carburizing treatment and the nitriding treatment under reduced pressure, it is possible to suppress non-uniformity due to the penetration of oxygen into the steel or the occurrence of denitrification, and to obtain a uniform treated surface with little unevenness. In particular, the carburizing treatment is desirably performed under reduced pressure. The degree of reduced pressure is a degree regarded as a vacuum in the heat treatment technology, and specifically, for example, 3000 Pa or less, and preferably about 50 Pa to 2000 Pa.

When the carburizing treatment and the nitriding treatment are continuously performed, the pressure may be reduced at the beginning of the treatment and the treatment may be continuously performed without reducing the pressure between the respective treatment operations, or the pressure may be reduced occasionally or each time and then the respective treatment operations may be performed. However, when the nitriding treatment is performed first, the first nitriding treatment may be performed without reducing the pressure.

The nitriding treatment is performed by placing a treatment target (bearing component) in an atmosphere of a gas serving as a supply source of nitrogen at a predetermined temperature for a certain period of time. In practice, while supplying a gas into the furnace at a predetermined flow rate, the temperature in the furnace is maintained, and then the treatment target (bearing component) is placed in the furnace for a predetermined period of time. Ammonia is generally used as a supply source of nitrogen. The gas serving as a supply source of nitrogen may contain, for example, another gas such as nitrogen gas in addition to the supply source of nitrogen.

As described above, the temperature of the nitriding treatment is in a range equal to or higher than the A1 transformation point and equal to or lower than 900°C, but is particularly preferably in a range of 700 to 900°C, and for example, 800°C may be selected for the first nitriding treatment, and 850°C may be selected for the second and subsequent nitriding treatments.

The nitriding treatment time is selected from a range of about 30 to 270 minutes, and is preferably in a range of about 90 to 240 minutes as a total treatment time regardless of the number of times of treatment. In addition, when the nitriding treatment is performed a plurality of times, the treatment time for one nitriding treatment is selected from a range of about 10 to 90 minutes, and is preferably in a range of about 30 to 80 minutes.

The carburizing treatment is performed by placing a treatment target (bearing component) in a reduced pressure atmosphere of a gas serving as a supply source of carbon at a predetermined temperature for a certain period of time. As the supply source of carbon, acetylene is particularly preferable.

As described above, the temperature of the carburizing treatment is in the range equal to or higher than the A1 transformation point and equal to or lower than 900°C, but is particularly preferably in a range of 750 to 900°C, and for example, 850°C may be selected.

The carburizing treatment time is selected from a range of about 20 to 100 minutes, and is preferably in a range of about 30 to 70 minutes as a total treatment time regardless of the number of times of treatment. In addition, when the carburizing treatment is performed a plurality of times, the treatment time of one carburizing treatment is selected from a range of about 10 to 50 minutes, and is preferably in a range of about 15 to 35 minutes.

Before and after the start of the treatment operation in this step, before and after the start and before and after the end of the temperature raising operation and the pressure reducing operation, during the switching of the operations of the carburizing treatment and the nitriding treatment, and the like, a time for soaking and diffusion may be secured.

### <(2) Quench Hardening Treatment Step>

In the present embodiment, the (2) quench hardening treatment step is a step of performing an operation of cooling to a temperature lower than the A1 transformation point after the final operation in the (1) carbonitriding treatment step is finished. In practice, the cooling is performed to a temperature lower than the A1 transformation point and equal to or close to the treatment temperature in the next step.

Examples of the cooling in the quench hardening treatment step include oil cooling, water cooling, and air cooling, and these cooling methods are used alone or in combination. In the present embodiment, it is preferable to mainly perform oil cooling. The oil cooling is performed by immersing the treatment target (bearing component) in oil for oil cooling.

The oil temperature of the oil cooling is selected from a range of about 0 to 170°C. The lower the oil temperature, the higher the cooling efficiency, and the harder the surface of the steel, but there is a concern that the quenching strain will increase. In practice, the temperature and size of the treatment target (bearing component) before the start of oil cooling, the target cooling temperature and cooling rate, the capacity of the oil bath, and the like may be taken into consideration to make an appropriate selection. As the oil of the oil cooling, a conventionally known oil can be used without any problem.

### <(3) Low-Temperature Tempering Treatment Step>

In the manufacturing method A, the operation in the (3) low-temperature tempering treatment step is performed. On the other hand, in the manufacturing method B, the operation in the (3) low-temperature tempering treatment step is omitted. In the present embodiment, the (3) low-temperature tempering treatment step is a step of performing a tempering treatment by holding the treatment target (bearing component) in a temperature range of 90 to 170°C lower than the treatment temperature in general tempering treatment.

The operation in the (3) low-temperature tempering treatment step has an effect of maintaining the state immediately after quenching by the (2) quench hardening treatment step. That is, the treatment target (bearing component) subjected to the operation in the (3) low-temperature tempering treatment step is in a stabilized state immediately after quenching by the (2) quench hardening treatment step, and the operation can be temporarily suspended.

Regarding a period of time from the end of the operation in the (3) low-temperature tempering treatment step to the start of the operation in the (4) sub-zero treatment step (hereinafter referred to as "standing time"), there is no problem even when the standing time exceeds 24 hours, and a good-quality bearing component can be manufactured even when the standing time exceeds 72 hours. However, if an untreated treatment target (bearing component) is left for an excessively long time, it becomes difficult to exhibit a desired performance, and thus the standing time is preferably within 120 hours, and more preferably within 72 hours.

For example, the operation in the (4) sub-zero treatment step in the next step is desirably performed in a facility equipped with a dedicated treatment apparatus. Even in a facility not equipped with such a treatment apparatus, by performing the operations up to the (3) low-temperature tempering treatment step, the untreated treatment target (bearing component) can be transferred to another facility for treatment after the (4) sub-zero treatment step.

Further, for example, even in a facility equipped with a treatment apparatus dedicated to the (4) sub-zero treatment step in the next step, the efficiency of the operation can be increased by performing the operations up to the (3) low-temperature tempering treatment step, temporarily stocking the untreated treatment target (bearing component), and performing the treatment after the (4) sub-zero treatment step later.

The treatment temperature in the (3) low-temperature tempering treatment step is in the temperature range of 90 to 170°C as described above, and preferably in a temperature range of 120 to 160°C.

In addition, the treatment time (holding time at the treatment temperature) in the (3) low-temperature tempering treatment step is selected from a range of about 30 to 180 minutes, and is preferably in a range of about 60 to 120 minutes.

### <(4) Sub-Zero Treatment Step>

In the present embodiment, the (4) sub-zero treatment step is a step of rapidly cooling the treatment target (bearing component) to 0°C or lower and holding the treatment target (bearing component) in a temperature range equal to or lower than 0°C. By performing the operation in the (4) sub-zero treatment step, the retained austenite amount in the treatment target (bearing component) can be suppressed.

When the treatment target (bearing component) is heated to form austenite in the (1) carbonitriding treatment step and then cooled to a temperature lower than the A1 transformation point in the (2) quench hardening treatment step, the austenite in the treatment target (bearing component) is transformed into martensite, but a part of austenite remains as retained austenite. The retained austenite causes aging deformation due to martensitic transformation over time, and causes a decrease in dimensional stability. The retained austenite not transformed into martensite is transformed into martensite by lowering the temperature. The sub-zero treatment (deep cooling treatment) is a treatment performed to promote the martensitic transformation.

The operation in the (4) sub-zero treatment step is performed following the (3) low-temperature tempering treatment step in the manufacturing method A, and is performed following the (2) quench hardening treatment step in the manufacturing method B. As described above, in the manufacturing method A, there is no problem even when the period of time from the end of the operation in the (3) low-temperature tempering treatment step to the start of the operation in the (4) sub-zero treatment step exceeds 24 hours.

On the other hand, in the manufacturing method B, it is desired to start the operation in the (4) sub-zero treatment step within 24 hours after completion of the operation in the (2) quench hardening treatment step. The state of the treatment target (bearing component) immediately after the operation in the (2) quench hardening treatment step is unstable, and if a long time elapses as it is, there is a risk that cracks occur in the treatment target due to residual stress generated during quenching.

The period of time from the end of the operation in the (2) quench hardening treatment step to the start of the operation in the (4) sub-zero treatment step is preferably 24 hours or less, more preferably 2 hours or less.

The treatment temperature in the (4) sub-zero treatment step is in the temperature range equal to or lower than 0°C as described above, but is preferably in a temperature range of -120 to -40°C, and more preferably in a temperature range of -80 to -65°C.

In addition, the treatment time (holding time at the treatment temperature) in the (4) sub-zero treatment step is selected from a range of about 5 to 120 minutes, and is preferably in a range of about 20 to 90 minutes.

In order to rapidly cool the treatment target (the bearing component) to a target treatment temperature, a cryogen of ethanol and dry ice (for example, adjusted to -72°C) or liquid nitrogen (1013.25 hPa = boiling point under 1 atm: -196°C) may be used as appropriate.

### <(5) Tempering Treatment Step>

In the present embodiment, the (5) tempering treatment step is a step of performing a tempering treatment by reheating the treatment target (bearing component) subjected to low temperature by the operation in the (4) sub-zero treatment step and holding the treatment target in a temperature range of 160 to 240°C. The holding temperature in the (5) tempering treatment step in the present embodiment is generally higher than the holding temperature in the (3) low-temperature tempering treatment step, but is generally within a range of low-temperature tempering (a range of about 150 to 250°C).

Since quenched martensite after the (4) sub-zero treatment step is brittle, tempering is performed. The treatment temperature in the (5) tempering treatment step is in a temperature range of 160 to 240°C as described above, but is preferably in a temperature range of 190 to 230°C, and more preferably in a temperature range of 190 to 210°C.

In addition, the treatment time (holding time at the treatment temperature) in the (5) tempering treatment step is selected from a range of about 60 to 300 minutes, and is preferably in a range of about 120 to 180 minutes.

As described above, the bearing component, the method for manufacturing the bearing component, and the rolling bearing of the present invention have been described with reference to the preferred embodiments, but the bearing component, the method for manufacturing the bearing component, and the rolling bearing of the present invention are not limited to the configurations of the embodiments described above. For example, in the above-described embodiment, the rolling bearing including the retainer 14 and the annular seal members 15a and 15b has been described as an example, but the present invention can be applied to rolling bearings having various configurations such as a configuration where any one of these components is omitted, a configuration where any one or both of these components are replaced with other members, and a configuration where other components are added.

In addition, one skilled in the art can appropriately modify the bearing component, the method for manufacturing the bearing component, and the rolling bearing of the present invention according to conventionally known knowledge. Such modifications are of course included in the scope of the present invention as long as these modifications still include the configuration of the present invention.

### Example

Below, the present invention will be described more specifically with reference to examples and comparative examples, but the present invention is not limited to the examples.

### <Preparation of Bearing Component>

As test materials (bearing components) to be subjected to the test, the inner ring 11 and the outer ring 12 illustrated in Fig. 1 were prepared. These test materials are cold forged products. The chemical compositions of the test materials are the same for the inner ring 11 and the outer ring 12, and are as shown in Table 1 below.

**[Table 1]**

| Chemical composition | Composition Ratio (mass%) |
|---|---|
| C | 0.6 to 0.95 |
| Si | 0.5 or less |
| Mn | 1.0 or less |
| Cr | 1.0 to 2.0 |
| P | 0.1 or less |
| S | 0.1 or less |
| Fe and other impurities | Remainder |

### <Heat Treatment>

### [Example 1]

Each test material was subjected to heat treatment according to the following procedure.

### (1) Carbonitriding Treatment Step

Nitrogen (N₂) gas was supplied into the furnace including the test material at a supply rate of 16.4 liters/min. to create a nitrogen atmosphere, and the temperature was raised to 800°C. After the temperature was raised and soaking was then performed for 10 minutes, the first nitriding treatment (I) was performed by supplying ammonia (NH₃) gas at a supply rate of 83.4 liters/min. and holding the temperature at 800°C for 60 minutes.

After completion of the nitriding treatment (I), the supply of the ammonia (NH₃) gas was stopped, and the temperature in the furnace was raised to 850°C. After the temperature was raised and soaking was then performed for 10 minutes, the supply of the nitrogen (N₂) gas was stopped, and the pressure inside the furnace was reduced to 50 Pa or less by vacuum evacuation over 20 minutes. Thereafter, the temperature was held at 850°C for 20 minutes while supplying acetylene (C₂H₂) gas at 53 liters/pulse, thereby performing the first carburizing treatment (I).

After completion of the carburizing treatment (I), the supply gas was switched from acetylene (C₂H₂) gas to nitrogen (N₂) gas and ammonia (NH₃) gas, and the second nitriding treatment (II) was performed by supplying the former at a supply rate of 16.4 liters/min. and the latter at a supply rate of 50 liters/min. while holding the temperature at 850°C for 60 minutes.

After completion of the nitriding treatment (II), the supply of the nitrogen (N₂) gas and the ammonia (NH₃) gas was stopped, and the pressure inside the furnace was reduced to 50 Pa or less by vacuum evacuation over 40 minutes. Thereafter, the second carburizing treatment (II) was performed by supplying acetylene (C₂H₂) gas at 53 liters/pulse while holding the temperature at 850°C for 30 minutes.

After completion of the carburizing treatment (II), the supply of the acetylene (C₂H₂) gas was stopped, and after diffusion for 2 minutes, the third nitriding treatment (III) was performed by supplying the nitrogen (N₂) gas and the ammonia (NH₃) gas at supply rates of 16.4 liters/min. for the former and 50 liters/min. for the latter while holding the temperature at 850°C for 45 minutes.

The operation in the (1) carbonitriding treatment step was performed as described above.

### (2) Quench Hardening Treatment Step

After completion of the operation in the (1) carbonitriding treatment step, the operation in the (2) quench hardening treatment step was performed by immersing the test material in oil adjusted to the temperature of 120°C for oil cooling.

### (3) Low-Temperature Tempering Treatment Step

After completion of the operation in the (2) quench hardening treatment step, the test material was again put into the furnace, heated to 150°C, and held at 150°C for 90 minutes to perform the operation in the (3) low-temperature tempering treatment step.

### (4) Sub-Zero Treatment Step

After completion of the operation in the (3) low-temperature tempering treatment step, the test material was taken out of the furnace, moved to a facility equipped with a sub-zero treatment apparatus, and left at room temperature for 3 days (72 hours: including the moving time). The operation in the (4) sub-zero treatment step was performed by cooling the test material after being left to about -80°C and holding the test material at that temperature for 60 minutes.

### (5) Tempering Treatment Step

After the operation in the (4) sub-zero treatment step was completed, the test material was again put into the furnace, heated to 190°C, and held at 190°C for 150 minutes, thereby performing the operation in the (5) tempering treatment step.

Thereafter, the test material was taken out of the furnace and sufficiently cooled to room temperature, and the heat treatment operation according to the manufacturing method of Example 1 was completed, thereby obtaining a bearing component of Example 1. The main operation conditions and contents of the treatment steps according to the manufacturing method of Example 1 described above are summarized in Table 2 below.

### [Example 2]

The same operations as in Example 1 were performed up to the (2) quench hardening treatment step, the operation in the (3) low-temperature tempering treatment step was not performed, and immersion was performed in a bath of a cryogen adjusted to about -72°C with ethanol and dry ice within 2 hours after completion of the operation in the (2) quench hardening treatment step. The test material was left for about 30 minutes, and the operations in the (4) sub-zero treatment step and the subsequent step as in Example 1 were performed, thereby completing the heat treatment operation according to the manufacturing method of Example 2 and obtaining a bearing component of Example 2. The main operation conditions and contents of the treatment steps according to the manufacturing method of Example 2 described above are summarized in Table 2 below.

**[Table 2]**

| Operation content | | | Unit | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|
| | Nitriding treatment (I) | Treatment temperature | °C | 800 | 800 | 800 | 800 | 800 | 800 | 800 | 800 | 800 | 800 | 800 | 800 | 800 | 800 | 800 |
| | | Treatment time | Minute | 60 | 60 | 60 | 60 | 60 | 60 | 60 | 60 | 60 | 60 | 60 | 60 | 60 | 45 | 45 |
| | | Nitrogen flow rate | L/min. | 16.4 | 16.4 | 16.4 | 16.4 | 16.4 | 16.4 | 16.4 | 16.4 | 16.4 | 16.4 | 16.4 | 16.4 | 16.4 | 16.4 | 16.4 |
| | | Ammonia flow rate | L/min. | 83.4 | 83.4 | 83.4 | 83.4 | 83.4 | 83.4 | 83.4 | 83.4 | 83.4 | 83.4 | 83.4 | 83.4 | 83.4 | 2 | 83.4 |
| | Carburizing treatment (I) | Treatment temperature | °C | 850 | 850 | 850 | 850 | 850 | 850 | 850 | 850 | 850 | 850 | 850 | 850 | 850 | 850 | 850 |
| | | Treatment time | Minute | 20 | 20 | 20 | 20 | 20 | 20 | 20 | 20 | 20 | 20 | 20 | 20 | 20 | 20 | 20 |
| | | Acetylene flow rate | L/pulse | 53 | 53 | 53 | 53 | 53 | 53 | 53 | 53 | 53 | 53 | 53 | 53 | 53 | 53 | 53 |
| | Nitriding treatment (II) | Treatment temperature | °C | 850 | 850 | 850 | 850 | 850 | 850 | 850 | 850 | 850 | 850 | 850 | 850 | 850 | 850 | 850 |
| (1) Carbonitriding treatment step | | Treatment time | Minute | 60 | 60 | 60 | 90 | 60 | 60 | 60 | 60 | 60 | 60 | 60 | 60 | 90 | 60 | 60 |
| | | Nitrogen flow rate | L/min. | 16.4 | 16.4 | 16.4 | 16.4 | 16.4 | 16.4 | 16.4 | 16.4 | 16.4 | 16.4 | 16.4 | 16.4 | 16.4 | 16.4 | 16.4 |
| | | Ammonia flow rate | L/min. | 50 | 50 | 50 | 50 | 50 | 50 | 50 | 50 | 50 | 50 | 50 | 50 | 50 | 2 | 83.4 |
| | Carburizing treatment (II) | Treatment temperature | °C | 850 | 850 | 850 | 850 | 850 | 850 | 850 | 850 | 850 | 850 | 850 | 850 | 850 | 850 | 850 |
| | | Treatment time | Minute | 30 | 30 | 30 | 30 | 30 | 30 | 30 | 30 | 30 | 30 | 30 | 30 | 30 | 30 | 30 |
| | | Acetylene flow rate | L/pulse | 53 | 53 | 53 | 53 | 53 | 53 | 53 | 53 | 53 | 53 | 53 | 53 | 53 | 53 | 53 |
| | Nitriding treatment (III) | Treatment temperature | °C | 850 | 850 | 850 | 850 | 850 | 850 | 850 | 850 | 850 | 850 | 850 | 850 | 850 | 850 | 850 |
| | | Treatment time | Minute | 45 | 45 | 45 | 45 | 45 | 45 | 45 | 45 | 45 | 45 | 45 | 45 | 60 | 45 | 45 |
| | | Nitrogen flow rate | L/min. | 16.4 | 16.4 | 16.4 | 16.4 | 16.4 | 16.4 | 16.4 | 16.4 | 16.4 | 16.4 | 16.4 | 16.4 | 16.4 | 16.4 | 16.4 |
| | | Ammonia flow rate | L/min. | 50 | 50 | 50 | 50 | 50 | 50 | 50 | 50 | 50 | 50 | 50 | 50 | 50 | 18 | 83.4 |
| (2) Quench hardening treatment step | | Treatment temperature | °C | 120 | 120 | 120 | 120 | 120 | 120 | 120 | 120 | 120 | 120 | 120 | 120 | 120 | 120 | 120 |
| (3) Low-temperature tempering treatment step | | Treatment temperature | °C | 150 | - | 150 | 150 | 150 | 150 | 150 | 150 | 150 | - | - | - | - | - | - |
| | | Treatment time | Minute | 90 | - | 90 | 90 | 90 | 90 | 90 | 90 | 90 | - | - | - | - | - | - |
| Standing time | | | Time | 72 | - | 72 | 72 | 72 | 72 | 72 | 72 | 72 | 72 | 72 | 72 | 72 | 72 | 72 |
| (4) Sub-zero treatment step | | Treatment temperature | °C | -80 | -80 | -65 | -65 | -80 | -65 | -80 | -40 | -50 | -80 | -80 | -80 | -80 | -80 | -80 |
| | | Treatment time | Minute | 60 | 60 | 60 | 60 | 60 | 60 | 60 | 60 | 60 | 60 | 60 | 60 | 60 | 60 | 60 |
| (5) Tempering treatment step | | Treatment temperature | °C | 190 | 190 | 190 | 230 | 210 | 210 | 230 | 210 | 210 | 210 | 190 | 230 | 190 | 190 | 190 |
| | | Treatment time | Minute | 150 | 150 | 150 | 150 | 150 | 150 | 150 | 150 | 150 | 150 | 150 | 150 | 150 | 150 | 150 |
| Treatment method remarks | | | | | *1 | | | | | | | | *2 | *2 | *2 | *2 | *2 | *2 |

| | | | | | | | | | | | | | | | | | | |
|---|---|---|---|---|---|---|---|---|---|---|---|---|---|---|---|---|---|---|
| *1: Immersion in -72°C cryogen (ethanol + dry ice) for 30 minutes within 2 hours after the operation in the (2) quench hardening treatment step *2: After the operation in the (2) quench hardening treatment step, the test material was left for 72 hours and subjected to the operation in the (4) sub-zero treatment step | | | | | | | | | | | | | | | | | | |

### [Examples 3 to 9]

Bearing components of Examples 3 to 9 were obtained by performing the heat treatment operations according to the manufacturing methods of Examples 3 to 9 in the same manner as in Example 1, except that the operation conditions of each treatment step in Example 1 were changed as shown in Table 2.

### [Comparative Examples 1 to 6]

The same operations as in Example 1 were performed up to the (2) quench hardening treatment step, the test material was left for 72 hours without performing the operation in the (3) low-temperature tempering treatment step, and the operation in the (4) sub-zero treatment step was performed. At this time, the operation conditions of each treatment step were changed as shown in Table 2 above. Bearing components of Comparative Examples 1 to 6 were obtained by performing the heat treatment operations according to the manufacturing methods of Comparative Examples 1 to 6 in the same manner as in Example 1, except for the above changes.

### <Measurement Test>

### (a) Vickers Hardness

The surface hardness A and the deep part hardness B of the obtained bearing components of Examples 1 to 9 and Comparative Examples 1 to 6 were measured by the above-described method. A micro Vickers hardness measuring machine was used for the measurement. The evaluation results are summarized in Table 3 below.

Note that the evaluation results were evaluated according to the following criteria.
• Surface hardness A
⊚ (Excellent): 800 Hv or more and 880 Hv or less
∘ (Good): 750 Hv or more and less than 800 Hv
× (Not good): Less than 750 Hv or more than 880 Hv

• Deep part hardness B
⊚ (Good): 633 Hv or more and 832 Hv or less
× (Not good): Less than 633 Hv or more than 832 Hv

### (b) Retained austenite amount

The surface retained y amount C and the average retained y amount D of the obtained bearing components of Examples 1 to 9 and Comparative Examples 1 to 6 were measured by the above-described method. For the measurement, an X-ray diffraction retained austenite amount measuring machine was used.

The measurement conditions of the measurement device were as follows.

### (Measurement Conditions for Surface Retained γ Amount C)

- Collimator diameter: 1 mm
- Voltage: 25 kV
- Current: 1.5 mA
- Measurement time: 200 sec

By performing measurement with the above method and conditions, the surface retained γ amount C in the region from the bearing groove surface to the depth of about 0.05 mm can be measured.

### (Measurement Conditions for Average Retained γ Amount D)

- Collimator diameter: 3 mm
- Voltage: 25 kV
- Current: 1.0 mA
- Measurement time: 100 sec

The evaluation results are summarized in Table 3 below.

Note that the evaluation results were evaluated according to the following criteria.
• Surface retained y amount C
⊚ (Excellent): 10 vol% or more and 20 vol% or less ∘ (Good): Less than 10 vol%
× (Not good): More than 20 vol%

• Average retained y amount D
⊚ (Excellent): 2 vol% or more and 8 vol% or less
∘ (Good): Less than 2 vol%
× (Not good): More than 8 vol%

**[Table 3]**

| Measurement test content | | Unit and the like | | Example 1 | Example 2 | Example 3 | Example 4 | Example 5 | Example 6 | Example 7 | Example 8 | Example 9 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|
| Vickers hardness | Surface hardness A | Average value | Hv | 858 | 868 | 836 | 815 | 837 | 827 | 819 | 801 | 820 | 763 | 794 | 763 | 824 | 767 | 793 |
| | | Minimum value | Hv | 839 | 846 | 809 | 786 | 819 | 804 | 793 | 779 | 793 | 740 | 779 | 748 | 793 | 757 | 768 |
| | | Evaluation | | ⊚ | ⊚ | ⊚ | ○ | ⊚ | ⊚ | ○ | ○ | ○ | × | ○ | × | ○ | ○ | ○ |
| | Deep part hardness B | Average value | Hv | 786 | 802 | 777 | 741 | 767 | 761 | 746 | 749 | 752 | 735 | 758 | 716 | 765 | 743 | 745 |
| | | Minimum value | Hv | 768 | 766 | 761 | 721 | 748 | 744 | 727 | 738 | 738 | 713 | 738 | 700 | 750 | 734 | 732 |
| | | Evaluation | | ⊚ | ⊚ | ⊚ | ⊚ | ⊚ | ⊚ | ⊚ | ⊚ | ⊚ | ⊚ | ⊚ | ⊚ | ⊚ | ⊚ | ⊚ |
| Retained austenite amount | Surface retained y amount C | vol% | | 12.8 | 7.7 | 13.4 | 1.8 | 10.0 | 10.1 | 1.1 | 9.4 | 11.2 | 25.8 | 14.9 | 3.2 | 36.3 | 18.9 | 21.4 |
| | | Evaluation | | ⊚ | ○ | ⊚ | ○ | ⊚ | ⊚ | ○ | ○ | ⊚ | × | ⊚ | ○ | × | ⊚ | × |
| | Average retained y amount D | vol% | | 4.9 | 1.1 | 6.7 | 2.3 | 2.0 | 2.3 | 0.3 | 4.0 | 4.1 | 5.7 | 10.4 | 0.4 | 16.2 | 9.9 | 10.4 |
| | | Evaluation | | ⊚ | ○ | ⊚ | ⊚ | ⊚ | ⊚ | ○ | ⊚ | ⊚ | ⊚ | × | ○ | × | × | × |

### <Durability Evaluation Test>

The obtained bearing component of Example 6 was subjected to a durability evaluation test as described below.

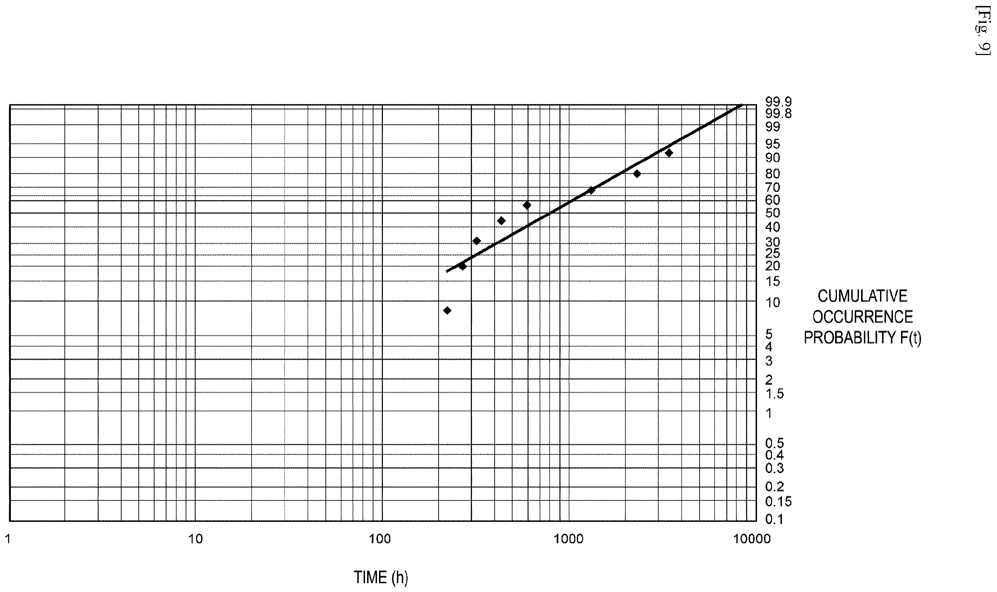

Specifically, the rolling bearing 10 illustrated in Fig. 1 was fabricated using the inner ring 11 and the outer ring 12 obtained as the bearing components of Example 6, with designation number 608 defined in the JIS B1513 "Designation Number of Rolling Bearing", and was used as the rolling bearing of Example 6. The obtained rolling bearing was subjected to a durability test under the conditions of a radial load of 1275 N, inner ring rotation, 5400 min⁻¹, and 50°C. The results are illustrated in the graph in Fig. 9. Fig. 9 is a graph illustrating the results of the durability evaluation test for the bearing component of Example 6, where the horizontal axis represents the time (h) of the durability test, and the vertical axis represents the cumulative occurrence probability F(t) of fatigue spalling in any one of the outer ring, inner ring, and balls of the bearing, both axes being plotted on a logarithmic scale.

As a result of the durability test, the rolling bearing of Example 6 meeting the conditions of the present invention was excellent in durability. This is because the surface hardness and the retained austenite amount meet the criteria.

### <Measurement of Nitrogen Concentration>

The nitrogen concentration of the obtained bearing components of Example 6 and Comparative Examples 5 and 6 was measured by the method described above.

The nitrogen concentration from the surface of the raceway groove to the depth of 0.08 mm was 0.26 (minimum value) to 0.72 mass% (maximum value) (average value: 0.45 mass%) for the bearing component of Example 6, 0.078 mass% (minimum value) to 0.098 mass% (maximum value) (average value: 0.09 mass%) for the bearing component of Comparative Example 5, and 0.37 mass% (minimum value) to 0.52 mass% (maximum value) (average value: 0.42 mass%) for the bearing component of Comparative Example 6.

### Reference Signs List

10: Rolling bearing (ball bearing) 11: Inner ring, 11', 12': Cut piece, 11a: Recessed part, inner ring raceway groove (raceway groove), 12: Outer ring, 12a: Recessed part, outer ring raceway groove (raceway groove), 13: Rolling element, 14: Retainer, 15a, 15b: Annular seal member, 16: Bearing space, 21: Collimator, 22: Resin, TP: Test piece

## Claims

1. A bearing component made of steel containing 0.6 mass% or more and 0.95 mass% or less of carbon, wherein
a hardness A of a region from a raceway groove surface to a depth of 0.2 mm is in a range of 750 to 880 Hv, and a hardness B of a region from the raceway groove surface to a depth exceeding 0.2 mm is in a range of 633 to 832 Hv, and
a retained austenite amount C on the raceway groove surface is 20 vol% or less, and an overall average retained austenite amount D is 8 vol% or less.

2. The bearing component according to claim 1, wherein the retained austenite amount C on the raceway groove surface is 10 vol% or more, and the overall average retained austenite amount D is 2 vol% or more.

3. The bearing component according to claim 1 or 2, wherein the bearing component is obtained through an operation in each of
a (1) carbonitriding treatment step performed in a temperature range equal to or higher than an A1 transformation point and equal to or lower than 900°C;
a (2) quench hardening treatment step of cooling to a temperature lower than the A1 transformation point;
a (3) low-temperature tempering treatment step performed in a temperature range of 90 to 170°C;
a (4) sub-zero treatment step performed in a temperature range equal to or lower than 0°C; and
a (5) tempering treatment step performed in a temperature range of 160 to 240°C.

4. The bearing component according to claim 1 or 2, wherein the bearing component is obtained through an operation in each of
a (1) carbonitriding treatment step performed in a temperature range equal to or higher than an A1 transformation point and equal to or lower than 900°C;
a (2) quench hardening treatment step of cooling to a temperature lower than the A1 transformation point;
a (4) sub-zero treatment step performed in a temperature range equal to or lower than 0°C within 24 hours after completion of the operation in the (2) quench hardening treatment step; and
a (5) tempering treatment step performed in a temperature range of 160 to 240°C.

5. A rolling bearing comprising the bearing component according to claim 1 or 2.

6. A method for manufacturing a bearing component, comprising:
a (1) carbonitriding treatment step performed in a temperature range equal to or higher than an A1 transformation point and equal to or lower than 900°C;
a (2) quench hardening treatment step of cooling to a temperature lower than the A1 transformation point;
a (3) low-temperature tempering treatment step performed in a temperature range of 90 to 170°C;
a (4) sub-zero treatment step performed in a temperature range equal to or lower than 0°C; and
a (5) tempering treatment step performed in a temperature range of 160 to 240°C.

7. The method for manufacturing a bearing component according to claim 6, wherein a period of time from an end of the operation in the (3) low-temperature tempering treatment step to a start of the operation in the (4) sub-zero treatment step exceeds 24 hours.

8. The method for manufacturing a bearing component according to claim 6, wherein at least a part of the operation in the (1) carbonitriding treatment step is performed under reduced pressure.

9. The method for manufacturing a bearing component according to claim 6, wherein the operation in the (1) carbonitriding treatment step is an operation of performing a carburizing treatment after a nitriding treatment.

10. A method for manufacturing a bearing component, comprising:
a (1) carbonitriding treatment step performed in a temperature range equal to or higher than an A1 transformation point and equal to or lower than 900°C;
a (2) quench hardening treatment step of cooling to a temperature lower than the A1 transformation point;
a (4) sub-zero treatment step performed in a temperature range equal to or lower than 0°C within 24 hours after completion of the operation in the (2) quench hardening treatment step; and
a (5) tempering treatment step performed in a temperature range of 160 to 240°C.

11. The method for manufacturing a bearing component according to claim 10, wherein at least a part of the operation in the (1) carbonitriding treatment step is performed under reduced pressure.

12. The method for manufacturing a bearing component according to claim 10, wherein the operation in the (1) carbonitriding treatment step is an operation of performing a carburizing treatment after a nitriding treatment.
